# EUROPÄISCHE PATENTANMELDUNG

(11) **EP 4 693 840 A2**
(43) Veröffentlichungstag der Anmeldung: **11.02.2026**
(21) Anmeldenummer: 25208195.5
(22) Anmeldetag: 16.07.2020
(51) Int. Cl.: H02K 9/197

(54) **TURBOLADER**

(62) Teilanmeldung aus: 20186302.4
(71) Anmelder: BMTS Technology GmbH & Co. KG, 70376 Stuttgart (DE)
(72) Erfinder: HUBER, Glenn, 70180 Stuttgart (DE); KLEINSCHMIDT, Rüdiger, 74354 Besigheim (DE); WEISS, Hartmut, 70569 Stuttgart (DE)
(74) Vertreter: Herrmann, Jochen

(57) **Zusammenfassung**

Die Erfindung betrifft einen Turbolader (10), insbesondere Abgasturbolader, mit einem Lagergehäuse (11), in dem eine Welle (12) drehbar gelagert ist, wobei die Welle (12) ein Verdichterrad (12.9) trägt, wobei ein Elektromotor zum Antrieb der Welle (12) vorgesehen ist, der einen Motorstator (40) und einen mit der Welle (12) gekoppelten Motorrotor (12.4) aufweist, wobei der Motorstator (40) zumindest bereichsweise in einem Motorgehäuse (20) aufgenommen ist und einen Statorkern (41) mit elektrischen Spulen (45) aufweist, wobei im oder am Motorgehäuse (20) eine Vergussmasse (28) vorgesehen ist, wobei der Statorkern (41) und/oder die Spulen (45) zumindest bereichsweise in der Vergussmasse (28) eingebettet sind. wobei weiterhin eine Gaszuführung (31) vorgesehen ist, die in Strömungsrichtung vor dem Verdichterrad (12.9) angeordnet ist und in Strömungsrichtung nach dem Verdichterrad (12.9) in einen Diffusorkanal (35) übergeleitet ist, und wobei der Diffusorkanal (35) mittelbar oder unmittelbar in einen spiralförmigen Verdichterkanal (32) übergeleitet ist, zur Verbesserung des Wirkungsgrads eines solchen Turboladers ist es erfindungsgemäß vorgesehen, dass die Vergussmasse (28) einen Wandabschnitt bildet, der als Luftführungselement (28.3) den Diffusorkanal (35) und/oder den Verdichterkanal (32) begrenzt.

## Beschreibung

Die Erfindung betrifft einen Turbolader insbesondere einen Abgasturbolader, mit einem Lagergehäuse, in dem eine Welle drehbar gelagert ist, wobei an die Welle ein Verdichterrad angekoppelt ist, wobei ein Elektromotor zum Antrieb der Welle vorgesehen ist, der einen Motorstator und einen mit der Welle gekoppelten Motorrotor aufweist, wobei der Motorstator zumindest bereichsweise in einem Motorgehäuse aufgenommen ist und einen Statorkern mit elektrischen Spulen aufweist, wobei im oder am Motorgehäuse eine Vergussmasse vorgesehen ist, wobei der Statorkern und/oder die Spulen zumindest bereichsweise in der Vergussmasse eingebettet sind, wobei weiterhin eine Gaszuführung vorgesehen ist, die in Strömungsrichtung vor dem Verdichterrad angeordnet ist und in Strömungsrichtung nach dem Verdichterrad in einen Diffusorkanal übergeleitet ist und wobei der Diffusorkanal mittelbar oder unmittelbar in einen spiralförmigen Verdichterkanal übergeleitet ist.

US 8,157,544 B2 offenbart einen Abgasturbolader, welcher auf einer Welle ein Verdichterrad und ein Turbinenrad trägt. Im Bereich des Verdichterrads ist der Welle ein Elektromotor zugeordnet. Mittels des Elektromotors kann der Antrieb der Welle unterstützt werden. Der Elektromotor weist ein Motorgehäuse auf, in das der Motorstator eingebaut ist. Der Motorstator besitzt einen Eisenkern, auf den Spulen aufgewickelt sind. Der Eisenkern und die Spulen sind in eine Vergussmasse eingebettet. Der Motorrotor des Elektromotors ist mit seinen Permanentmagneten auf die Welle aufgezogen. Das Motorgehäuse ist in Form einer Kartusche ausgebildet, die in das Lagergehäuse eingesetzt werden kann. Während des Betriebseinsatzes saugt das Verdichterrad Luft entlang der Drehachse der Welle über eine Gaszuführung an. Die Luft wird vom Verdichterrad komprimiert und radial zur Drehachse in einen Diffusor übergeleitet. Der Diffusor führt zu einem Spiralkanal. In diesem Spiralkanal wird die Luft weiter komprimiert. Im Anschluss an den Spiralkanal kann die verdichtete Luft einem Verbrennungsmotor zugeführt werden. Der Diffusor und der Spiralkanal werden von einem Verdichtergehäuse gebildet, in dem das Verdichterrad angeordnet ist. Mit dem Elektromotor kann das Ansprechverhalten des Turboladers optimiert werden. Problematisch ist die Wärmeentwicklung, die beim Betrieb des Elektromotors entsteht. Diese Wärmeentwicklung bewirkt lokal unerwünschte thermische Ausdehnungen im Lagergehäuse, in dem die Kartusche eingesetzt ist. Daher schlägt die US 8,157,544 B2 Isolationselemente vor, die den Wärmeeintrag in das Lagergehäuse reduzieren sollen. Zudem ist ein Kühlkreislauf im Bereich des Elektromotors vorgesehen.

Es ist Aufgabe der Erfindung, einen Turbolader der eingangs erwähnten Art bereitzustellen, der mit geringem Teileaufwand einen wirkungsgradoptimierten Betrieb zulässt.

Diese Aufgabe wird erfindungsgemäß dadurch gelöst, dass die Vergussmasse einen Wandabschnitt bildet, der als Luftführungselement den Diffusorkanal und/oder den Verdichterkanal begrenzt.

Dadurch dass die Vergussmasse als Luftführungselement des Diffusors bzw. des Verdichterkanals ausgebildet ist, kann in diesem Luftführungsbereich der Aufwand für zusätzliche Gehäuseteile reduziert bzw. eliminiert werden. Zudem ermöglicht diese Bauweise eine bessere Luftführung, da die Vergussmasse einfach maschinell bearbeitet werden kann. Die Oberflächenkontur der Vergussmasse lässt sich somit exakt auf die gewünschte Luftführungsgeometrie anpassen. Hierdurch verbessert sich der Wirkungsgrad des Turboladers. Die während des Betriebs des Elektromotors entstehende Abwärme kann zumindest teilweise von der Vergussmasse in die im Diffusorkanal bzw. Spiralkanal geleitete Luft kontinuierlich abgetauscht werden. Dies vereinfacht die Kühlung des Elektromotors. Ein weiterer Vorteil ergibt sich dadurch, dass eine axial kompakte Bauweise erreicht werden kann. Insbesondere lässt sich durch die erfindungsgemäße Maßnahme das Verdichterrad nahe an der zugewandten Lagerstelle der Welle positionieren. Hierdurch verringert sich die Lagerbelastung und es ergibt sich eine größerer Laufruhe der Welle und damit insgesamt des Turboladers.

Gemäß einer bevorzugten Erfindungsvariante kann es vorgesehen sein, dass ein Verdichtergehäuse vorgesehen ist, das mit dem Motorgehäuse gekoppelt ist, und dass das Verdichtergehäuse zumindest bereichsweise den Diffusorkanal und/oder den Verdichterkanal aufweist. Hierbei wird der Diffusorkanal bzw. der Verdichterkanal gemeinsam von dem Motorgehäuse und dem Verdichtergehäuse gebildet. Dies vereinfacht die Bauweise des Verdichtergehäuses erheblich.

Wenn vorgesehen ist, dass sich das von der Vergussmasse gebildete Luftführungselement zumindest bereichsweise radial zur Drehachse der Welle erstreckt, kann es als Teil des Diffusorkanals effektiv genutzt werden, um das vom Verdichterrad radial abströmende Gas zu führen.

Ein erfindungsgemäßer Turbolader kann auch dergestalt sein, dass das Verdichterrad ein Abschlusselement, insbesondere in Form eines Nabenabschnitts, aufweist, das auf der der Gaszuführung zugewandten Seite Verdichterschaufeln trägt, dass die Vergussmasse eine Begrenzungsfläche aufweist, und dass zwischen der den Verdichterschaufeln abgewandten Seite des Abschlusselements, und der Begrenzungsfläche ein Spaltbereich gebildet ist. Hierdurch lässt sich der Bauaufwand weiter vereinfachen. Insbesondere kann die Begrenzungsfläche in ihrer Kontur durch maschinelle Bearbeitung optimal auf die zugekehrte Fläche des Verdichterrads angepasst werden. Durch diese Bauweise können, im Vergleich zu herkömmlichen elektrisch unterstützten Turboladern, relativ kurze axiale Bauweisen verwirklicht werden.

Weiterhin kann es auch vorgesehen sein, dass die Begrenzungsfläche über einen Übergang oder einen Absatz in die Fläche des Luftführungselements übergeht, wobei vorzugsweise vorgesehen ist, dass der Übergang oder Absatz den radial außenliegenden Umfangsbereich des Abschlusselements unter Bildung eines Spaltbereichs zumindest bereichsweise umgreift. Auf diese Weise werden eine optimierte Luftführungsgeometrie und weiterhin eine dichte axiale Zuordnung des Verdichterrads zum zugekehrten Lager der Welle erreicht.

Insbesondere lässt sich dabei auch eine Bauweise verwirklichen, bei der das Abschlusselement des Verdichterrads in dem Übergang oder Absatz aufgenommen ist, der sich an das Luftführungselement des Diffusors anschließt. Vorteilhafterweise sollte die Höhe des Übergangs oder Absatzes so gewählt werden, dass sie höchstens der Dicke des Begrenzungselements an dessen radial außenliegenden Ende, vermehrt um die minimale Breite des Spalts zwischen der Begrenzungsfläche und dem Abschlusselement entspricht. Dies begünstigt eine optimale Luftführung.

Eine einfache Fertigung des Motorgehäuses gelingt insbesondere dann, wenn vorgesehen ist, dass das Motorgehäuse eine Wandung aufweist, die einen Bodenabschnitt bildet und die dem Lagergehäuse zugewandt ist, dass von der Wandung eine Innenwand, beispielsweise im rechten Winkel oder in einem beliebigen anderen Winkel, aufsteigt, die sich in Richtung der Drehachse der Welle erstreckt, und dass die Wandung und die Innenwand einen topfartigen Aufnahmebereich bilden, in dem die Vergussmasse aufgenommen ist. In diesen topfartigen Aufnahmebereich kann die Vergussmasse einfach eingegossen werden. Bestimmte Bereiche der Vergussmasse können durch mechanische Bearbeitung anschließend einfach bearbeitet werden, um die gewünschte Geometrie zu erzeugen.

Eine denkbare Erfindungsvariante ist dergestalt, dass die Wandung, die den Bodenabschnitt bildet, eine Durchführung, vorzugsweise eine Bohrung aufweist, dass die Vergussmasse einen Durchbruch, vorzugsweise eine Bohrung aufweist, dass die Durchführung und der Durchbruch zueinander in Flucht stehen, und dass sich die Welle durch den Durchbruch und die Durchführung hindurch erstreckt. Der Durchbruch und die Durchführung können beispielsweise in einer Werkzeugmaschine in einer einzigen Aufspannung gefertigt werden, sodass sie exakt zueinander ausgerichtet sind. Sind der Durchbruch und die Durchführung als Bohrungen ausgebildet, so sind diese beiden Bohrungen zueinander exakt konzentrisch. Dies ermöglicht es beispielsweise, das Motorgehäuse mit der Durchführung des Bodenabschnitts exakt an einem Zentrierabschnitt des Lagergehäuses auszurichten. Dabei ist dann auch der Durchbruch der Vergussmasse und mithin der Motorstator passgenau gegenüber dem Lagergehäuse ausgerichtet.

Um das Verdichterrad in axial geringem Abstand zur zugewandten Lagerstelle der Welle positionieren zu können, kann es auch zusätzlich vorgesehen sein, dass der Motorstator einen Statorkern aus ferromagnetischem Material aufweist, dass der Statorkern einen einteiligen oder mehrteiligen Ringabschnitt aufweist, an den radial nach innen gerichtete Zähne angekoppelt sind, dass die Zähne in Polstücken enden, die unter Bildung eines Spaltbereichs dem Motorrotor gegenüberstehen, und dass der Ringabschnitt zwischen benachbarten Zähnen Verbindungsabschnitte als Joche ausbildet, auf die die Spulen des Motorstators aufgewickelt sind.

Durch diese Bauweise ergibt sich eine geringere Breite des Motorstators in Achsrichtung der Welle, verglichen mit einer Bauweise, bei der die Spulen um die Zähne gewickelt sind.

Zudem kann beispielsweise in dem Zwischenraum zwischen zwei Zähnen, bei Wicklung der Spule um das Joch, eine einzige leistungsfähige Spule angeordnet werden. Hierdurch kann die Gesamt-Leistungsfähigkeit des Elektromotors, bei gleichzeitig geringer axialer Breite erhöht werden. Bei einer solchen Bauweise vergrößert sich zwar die Erstreckung des Elektromotors in radialer Richtung. Dieser Nachteil wird jedoch durch den geringeren axialen Abstand des Verdichterrads zum zugeordneten Wellenlager und die damit gewonnene Laufruhe bzw. Lebensdauer des Lagers deutlich kompensiert.

Um den radialen Bauraum optimal zu nutzen, kann es auch vorgesehen sein, dass die Innenwand des Motorgehäuses Aufnahmebereiche aufweist, die in Form von radial nach außen in die Innenwand eingetieften Aufnahmen ausgebildet sind, und dass in den Aufnahmebereichen jeweils zumindest eine Spule mit ihrem radial außenliegenden Spulenbereich zumindest teilweise aufgenommen ist.

Um einen definierten Spaltbereich zwischen dem Motorrotor und dem Motorstator vorsehen zu können, ist es gemäß einer Erfindungsvariante vorgesehen, dass die Zähne von der Vergussmasse zumindest teilweise umgeben sind, wobei vorgesehen ist, dass zumindest ein Teil der Polstücke an ihren an den Spaltbereich angrenzenden Enden nicht mit Vergussmasse bedeckt ist. Außerhalb der Polstücke können die Zähne von der Vergussmasse vor Verschleiß geschützt werden.

Die Erfinder haben erkannt, dass für die Zwecke eines effektiv arbeitenden Turboladers, der Motorstator eine maximale Längserstreckung in Achsrichtung der Welle und einen maximalen Außendurchmesser aufweisen sollte, wobei das Verhältnis der maximalen Längserstreckung zu dem maximalen Außendurchmesser ≤0,33, vorzugsweise ≤0,3 ist.

Wenn vorgesehen ist, dass die Innenwand des Motorgehäuses über eine Verrundung in die den Bodenabschnitt bildende Wandung übergeht, und dass im Bereich dieser Verrundung zumindest ein radial äußerer Krümmungsbereich der Wicklung einer Spule angeordnet ist, so sind die Spulen an die Gehäusekontur in axialer Richtung angepasst. Damit wird der vorhandene Bauraum effektiv genutzt, ohne dass die Spulen den axial vorhandenen Bauraum unnötig verlängern.

Eine besonders vorteilhafte Erfindungsvariante sieht vor, dass das Motorgehäuse zwischen der dem Lagergehäuse abgewandten Seite des Motorstators und der dem Verdichterrad zugewandten Seite einen Raumbereich bildet, in dem Strom-Versorgungsleitungen für die Spulen zumindest bereichsweise angeordnet und in die Vergussmasse eingegossen sind. Somit sind die Stromversorgungsleitungen geschützt vor Korrosion und mechanischen Einwirkungen gesichert in der Vergussmasse aufgenommen.

Wenn die Versorgungsleitungen radial beabstandet von dem Verdichterrad angeordnet sind, so wird die axial kompakte Zuordnung des Verdichterrads zu der zugeordneten Lagerstelle der Welle hierdurch nicht oder nur geringfügig beeinflusst.

Vorzugsweise sind die Stromversorgungsleitungen platzsparend in den Bereichen radial innen und/oder radial außen der Spulen angeordnet, sodass sie den durch die Krümmung der Spulenwicklungen freigegebenen Raum nutzen und das Motorgehäuse nicht unnötig in axialer Richtung vergrößern. Diese interne Verkabelung des Motorstators kann in Form von Kabeln oder Leiterschienen gestaltet werden.

Weiter bevorzugt können an die Strom-Versorgungsleitungen endseitig Steckverbindungen für die Kontaktierung angeschlossen sein. Diese Steckverbindungen können insbesondere in die Vergussmasse mit eingegossen werden.

Zusätzlich kann es auch vorgesehen sein, dass das Motorgehäuse eine Öffnung aufweist, die Zugang zu dem Raumbereich schafft, in dem die Strom-Versorgungsleitungen angeordnet sind, dass zumindest ein Teil der Stromversorgungsleitungen über die Öffnung aus dem Raumbereich zu einer Anschlussseite geführt sind, und dass die Öffnung zumindest teilweise mit der Vergussmasse ausgefüllt ist. Im Bereich der Anschlussseite können die Strom-Versorgungsleitungen gesichert an eine Stromversorgung angekoppelt werden. Beispielweise kann es dabei auch vorgesehen sein, dass ein Kontaktierungselement der Strom-Versorgungsleitungen in die Vergussmasse eingegossen ist

Vorzugsweise kann es vorgesehen sein, dass die Öffnung im Bereich einer Seite des Motorgehäuses mündet, die sich quer zu der zwischen Motorgehäuse und Lagergehäuse gebildeten Anreihseite erstreckt. Hier ist die Anschlussseite dann gut für Montage- oder Wartungsarbeiten zugänglich.

Eine denkbare Erfindungsvariante kann dergestalt sein, dass der Statorkern radial zur Drehachse der Welle gesehen außenliegend Stützflächen aufweist, die an Stützabschnitten des Motorgehäuses in Radialrichtung abgestützt sind und/oder dass der Statorkern axial zur Drehachse der Welle gesehen außenliegend Stützflächen aufweist, die an Widerlagern des Motorgehäuses in Achsrichtung abgestützt sind, wobei vorzugsweise vorgesehen ist, dass die Stützabschnitte und/oder die Widerlager einteilig von dem Motorgehäuse gebildet sind. Auf diese Weise lässt sich der Statorkern passgenau zum Motorgehäuse positionieren. Dadurch wird die Rotordynamik optimiert. Insbesondere mit der radialen Abstützung wird ein die Rotordynamik nachteilig beeinflussender Achsversatz des Motorstators gegenüber dem Motorrotor minimiert.

Bevorzugt ist es so, dass zwischen den Stützflächen und den Stützabschnitten bzw. Widerlagern keine Vergussmasse angeordnet ist. Dies ermöglicht eine direkte und passgenaue Abstützung. Zudem wird über die Kontaktflächen eine Ableitung der Verlustwärme des Elektromotors in das Motorgehäuse unterstützt. Dies ist insbesondere dann von Vorteil, wenn das Motorgehäuse einen Kühlmittelkanal aufweist. In diesem kann dann die Verlustwärme des Elektromotors abgeführt werden.

Ein erfindungsgemäßer Turbolader kann dadurch gekennzeichnet sein, dass die Welle im Bereich der dem Motorgehäuse zugewandten Anreihseite mittels eines hydrodynamischen Gleitlagers, insbesondere eines hydrodynamischen Radial-Gleitlagers oder eines kombinierten hydrodynamischen Radial-/Axialgleitlagers gelagert ist. Über den Elektromotor werden hohe dynamische Kräfte in die Welle eingetragen, die zusätzlich zu den Kräften wirken, die über das Verdichterrad bzw. das Turbinenrad eingetragen werden. Die Erfinder haben erkannt, dass sich diese Kräfte mit den vorgenannten hydrodynamischen Gleitlagern, insbesondere dem kombinierten hydrodynamischen Radial-/Axialgleitlagers in optimaler Weise abtragen lassen, wobei eine hohe Lebensdauer für den Turbolader garantiert ist.

Die Erfindung wird im Folgenden anhand eines in den Zeichnungen dargestellten Ausführungsbeispiels näher erläutert. Es zeigen:
Figur 1 im Vollschnitt und Teildarstellung einen Turbolader,
Figur 2 eine Motoreinheit des Abgasturboladers gemäß Figur 1 in perspektivischer Darstellung,
Figur 3 die Motoreinheit gemäß Figur 2 in Seitenansicht und im Schnitt,
Figur 4 eine Motoreinheit mit einem modifizierten Motorgehäuse und
Figur 5 die Motoreinheit gemäß den Figuren 2 und 3 in einer vereinfachten Darstellung in Seitenansicht und im Schnitt.

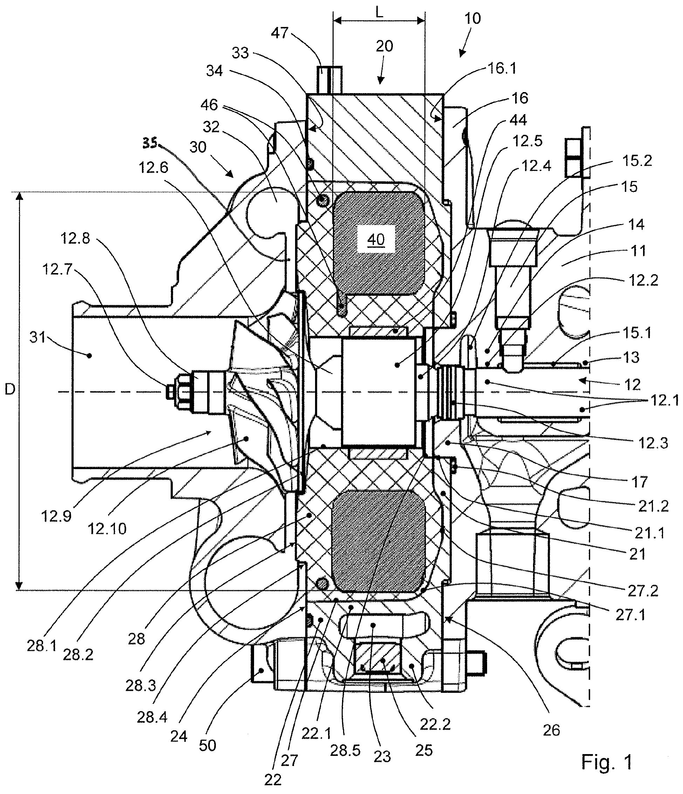

Figur 1 zeigt einen Abgasturbolader zur Verwendung in einem Verbrennungsmotor. Die Erfindung ist allerdings nicht auf Abgasturbolader beschränkt, sondern kann auch in einem Turbolader 10, beispielsweise in Brennstoffzellen zur Gasverdichtung, Verwendung finden.

In Figur 1 ist, zur besseren Übersichtlichkeit, nur ein Teil des Turboladers 10 gezeigt. Insbesondere veranschaulicht diese Darstellung die Gestaltung des Turboladers 10 im Bereich seiner Verdichterseite. Auf der rechten Bildseite ist durch eine gestrichelte Linie angedeutet, dass der Turbolader 10 zusätzlich auch noch eine Expansionsseite mit einem Turbinenrad aufweisen kann. Dieser Bereich des Turboladers 10 kann in gängiger Weise ausgeführt werden. Vorzugsweise kann dieser Bereich dann auch so gestaltet sein, wie es in der EP 3 293 406 A1 beschrieben ist.

Der Turbolader 10 besitzt ein Lagergehäuse 11, in dem eine Welle 12 drehbar gelagert ist. Bevorzugt ist die Lagerung der Welle 12 so gestaltet, wie dies in der EP 3 293 406 A1 beschrieben ist. Demgemäß können im Rahmen der Erfindung zur Lagerung der Welle 12 wenigstens ein, vorzugsweise zwei hydrodynamische Gleitlager 12.2 verwendet sein.

Dieses hydrodynamische Gleitlager 12.2 weist einen Stator und einem relativ zum Stator drehbaren Rotor auf, wobei eine Rotor-Lagerfläche einer Gegenfläche des Stators zur hydrodynamischen Druckerzeugung gegenübersteht. Die Rotor-Lagerfläche und/oder die Gegenfläche bilden bei einem Schnitt längs und durch die Rotationsachse der Welle 12 in Schnittansicht eine durchgehende Lagerkontur, die aus wenigstens zwei Konturabschnitten gebildet ist.

Der durch die Konturabschnitte gebildete Konturenzug ist dabei so gestaltet, dass er, vorzugsweise in Achsenrichtung durchgehend, hydrodynamische Tragfähigkeit erzeugt, die in radialer und axialer Richtung wirkt. Dabei können beispielsweise die Konturabschnitte mittels wenigstens eines Übergangsabschnitts derart stetig ineinander übergeleitet sein, dass durchgehend hydrodynamische Tragfähigkeit über die Konturabschnitte und den Übergangsabschnitt erzeugbar ist.

Das Gleitlager ist vorzugsweise als Mehrflächengleitlager mit zwei oder mehreren Schmierkeilen im Bereich der Konturabschnitte und des Übergangsabschnittes ausgebildet.

Entsprechend den vorstehenden Ausführungen weist die Welle 12 zwei Lagerabschnitte 12.1 auf, die jeweils Teil eines hydrodynamischen Gleitlagers 12.2 sind. Die beiden hydrodynamischen Gleitlager 12.2 sind zueinander axial beabstandet. Eines der hydrodynamischen Gleitlager 12.2 ist dabei, wie Figur 1 zeigt, im Bereich der Verdichterseite des Turboladers 10 angeordnet. Das andere hydrodynamische Gleitlager 12.2 ist dem turbinenseitigen Bereich des Turboladers zugeordnet. Die beiden Lagerabschnitte 12.1 stehen Lagerstellen 13, 14 des Lagergehäuses 11 gegenüber, um die hydrodynamischen Gleitlager 12.2 zu bilden. Dabei können die Lagerstellen 13, 14 auch von einer separaten Buchse oder separaten Buchsen des Lagergehäuses 11 gebildet sein. Die hydrodynamischen Gleitlager 12.2 werden über eine Schmiermittelversorgung 15 des Lagergehäuses 11 mit Schmiermittel versorgt. Die Schmiermittelversorgung 15 weist Schmiermittelführungen 15.1 auf, die zu den hydrodynamischen Gleitlagern 12.2 geleitet sind. Weiterhin sind Ableitungen 15.2 vorgesehen. Durch diese kann das Schmiermittel nach Durchströmen der hydrodynamischen Gleitlager 12.2 abgeleitet werden.

Im Anschluss an den Lagerabschnitt 12.1 besitzt die Welle 12 einen Dichtabschnitt 12.3. Mit diesem Dichtabschnitt 12.3 ist die Welle 12 gegenüber einer Durchführung des Lagergehäuses 11 abgedichtet.

Die Welle 12 trägt anschließend an den Dichtabschnitt 12.3 einen Motorrotor 12.4. Der Motorrotor 12.4 ist Teil eines Elektromotors und weist Permanentmagnete 12.5 auf, die mit der Welle 12 fest verbunden sind.

Auf der dem Dichtabschnitt 12.3 gegenüberliegenden Seite des Motorrotors 12.4 bildet die Welle 12 einen Übergangsabschnitt 12.6. Auf diesem Übergangsabschnitt 12.6 ist ein Verdichterrad 12.9 montiert. Zu diesem Zweck weist das Verdichterrad 12.9 eine Bohrung auf, mit der es auf die Welle 12 aufgeschoben ist. Das Verdichterrad 12.9 stützt sich gegen den Übergangsabschnitt 12.6 ab und wird mit einer Mutter 12.8 gesichert. Die Mutter 12.8 ist auf einen Endabschnitt 12.7 der Welle 12 aufgeschraubt.

Das Verdichterrad 12.9 besitzt ein Abschlusselement 36, an dem Verdichterschaufeln 12.10 einteilig angeformt sind. Das Verdichterrad 12.9 ist drehbar in einem Verdichtergehäuse 30 angeordnet. Das Verdichtergehäuse 30 besitzt eine Gaszuführung 31, die stromauf des Verdichterrads 12.9 angeordnet ist. In Strömungsrichtung nach dem Verdichterrad 12.9 ist ein Diffusorkanal 35 vorgesehen. Der Diffusorkanal 35 geht in einen spiralförmigen Verdichterkanal 32 über.

Wie Figur 1 zeigt, weist das Verdichtergehäuse 30 eine Anschlussseite 33 auf. Mit dieser Anschlussseite 33 ist das Verdichtergehäuse 30 an ein Motorgehäuse 20 angekoppelt. Dabei stützt sich das Verdichtergehäuse 30 mit seiner Anschlussseite 33 an einer Stützfläche 24 des Motorgehäuses 20 ab. Für eine abgedichtete Verbindung ist eine Dichtung 34 im Bereich der Anschlussseite 33 vorgesehen.

Das Motorgehäuse 20 besteht vorzugsweise aus einem nicht magnetisierbaren Material, beispielsweise aus Aluminium und besitzt eine Wandung 21, die in Form eines Bodens an der dem Lagergehäuse 11 zugewandten Seite angeordnet ist. Die Wandung 21 ist mit einer Durchführung 21.1 in Form einer Bohrung versehen. In diese Durchführung 21.1 ist ein Zentrierabschnitt 17 des Lagergehäuses 11 eingepasst. Auf diese Weise ist das Motorgehäuse 20 gegenüber dem Lagergehäuse 11 in radialer Richtung ausgerichtet. Vorteilhafterweise kann es weiterhin vorgesehen sein, dass die Durchführung 21.1 zusätzlich zu dem Zentrierabsatz 17 einen weiteren axialen Abschnitt aufweist. Dieser weitere axiale Abschnitt hat einen zu dem Zentrierabsatz 17 abweichenden Innendurchmesser und dient zur Aufnahme des Motorrotors 12.5.

Wie Figur 1 erkennen lässt, ist das Motorgehäuse 20 zwischen dem Lagergehäuse 11 und dem Verdichtergehäuse 30 angeordnet. Entsprechend besitzt das Lagergehäuse 11 eine Befestigungsfläche 16.1, die vorzugsweise an einem Flansch 16 ausgebildet sein kann. Das Motorgehäuse 20 liegt mit einer Stützfläche 26 an der Befestigungsfläche 16.1 an. Zur Abdichtung ist eine Dichtung 21.2 im Bereich zwischen der Stützfläche 26 und der Befestigungsfläche 16.1 vorgesehen.

Dadurch, dass das Motorgehäuse 20 zwischen dem Lagergehäuse 11 und dem Verdichtergehäuse 30 angeordnet ist, wird eine kompakte und einfach zu montierende Bauweise erreicht. Zur Fixierung der Baueinheiten aneinander können Befestigungselemente 50, beispielsweise Befestigungsschrauben vorgesehen sein. Mit den Befestigungselementen 50 können die drei Gehäuse gegeneinander verspannt werden.

Das Motorgehäuse 20 besitzt im Anschluss an die Wandung 21 eine umlaufende Seitenwand 22. Dabei steigt die Seitenwand 22 von der Wandung 21 auf. Im vorliegenden Ausführungsbeispiel schließt die Seitenwand 22 mittelbar über eine Verrundung 27.1 an die Wandung 21 an. Entsprechend bildet die Seitenwand 22 eine Innenwand 22.1. Diese geht über die Verrundung 27.1 in einen Bodenabschnitt 27.2 der Wandung 21 über.

Die Innenwand 22.1, die Verrundung 27.1 und der Bodenabschnitt 27.2 bilden eine gemeinsame Aufnahme. In dieser Aufnahme ist eine Vergussmasse 28 aufgenommen.

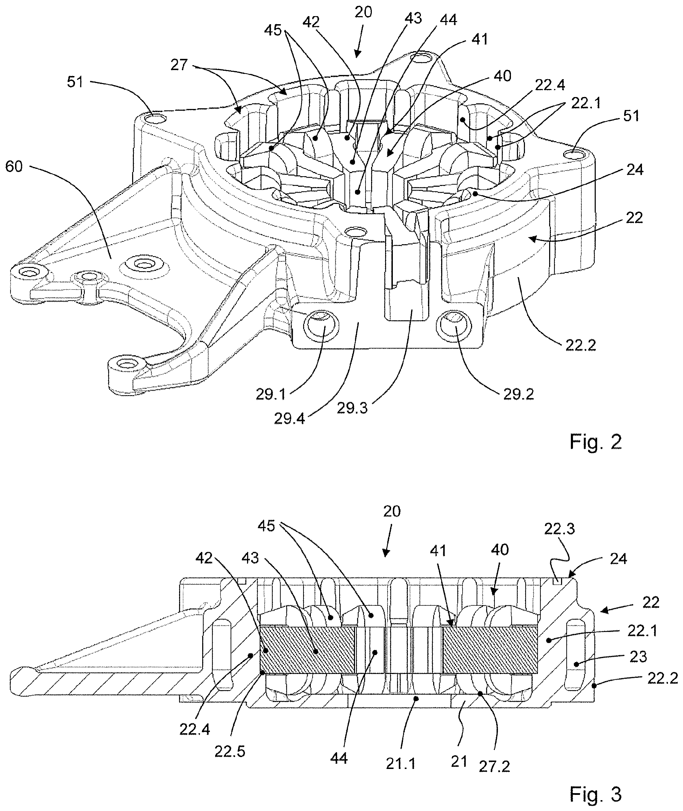

In den Figuren 2 und 3 ist die Gestaltung des Motorgehäuses 20 deutlicher erkennbar. Wie diese Darstellungen zeigen, ist die Innenwand 22.1 mit zueinander in Umfangsrichtung beabstandeten Stützabschnitten 22.4 versehen. Zwischen den Stützabschnitten 22.4 sind Aufnahmebereiche 27 gebildet. Diese Aufnahmebereiche 27 sind in Form von vertieften Mulden in die Innenwand 22.1 eingearbeitet.

In dem Motorgehäuse 20 kann ein Motorstator 40 untergebracht werden. Der Motorstator 40 besitzt einen Statorkern 41 aus ferromagnetischem Material. Insbesondere ist der Statorkern 41 aus mehreren Elektroblechen gebildet, die in Achsrichtung der Welle 12 aufeinander gestapelt sind. Beispielsweise kann der Statorkern 41 stanzpaketiert sein. Dabei werden einzelne Statorbleche aus einem Blechzuschnitt ausgestanzt und übereinandergestapelt. Die einzelnen Statorbleche können über Verprägungen zu einem einheitlichen Statorkern 41 miteinander verbunden sein.

Wie Figur 2 zeigt, weist der Statorkern 41 Zähne 43 auf. Diese Zähne 43 ragen radial nach innen. Die Zähne 43 sind an ihren radial außen liegenden Bereichen mit Verbindungsabschnitten 42 miteinander verbunden. Vorzugsweise sind die Verbindungsabschnitte 42 einteilig mit den Zähnen 43 verbunden. An ihren radial innenliegenden Enden weisen die Zähne 43 Polstücke 44 auf.

Der Statorkern 41 besitzt Spulen 45. Diese Spulen 45 werden von elektrisch leitenden Drähten gebildet, die um die Verbindungsabschnitte 42 herum gewickelt sind. Wie Figur 2 erkennen lässt, sind die Spulen 45 mit ihrem radial außen liegenden Bereich in den Aufnahmen 27 aufgenommen. Der radial innenliegende Bereich der Spulen 45 ist jeweils zwischen zwei benachbarten Zähnen 43 angeordnet.

Wie Figur 3 zeigt, kann der Statorkern 41 mit seinen Spulen 45 in das Motorgehäuse 20 eingelegt werden. Dabei stützt sich der Statorkern 41 mit seinen Verbindungsabschnitten 42 radial außen an den Stützabschnitten 22.4 des Motorgehäuses 20 ab. Mit den über den Umfang des Statorkerns 41 verteilt angeordneten Stützabschnitten 22.4 wird eine radiale Zentrierung des Statorkerns 41 erreicht. Idealerweise steht der Statorkern 41 in direktem Kontakt mit den Stützabschnitten 22.4, um eine gute Wärmeleitung der im Elektromotor erzeugten Verlustwärme in das Motorgehäuse 20 zu erreichen. Fertigungsbedingt kann jedoch auch hier ein geringes Spiel vorgesehen sein. Allerdings sollte dieses Spiel so toleriert sein, dass eine dadurch entstehende Desaxierung des Motorstators 40 zu dem Motorrotor 12.4 sich nicht negativ auf die Rotordynamik auswirkt.

Alternativ kann der Statorkern 41 in Verlängerung der nach innen gerichteten Zähne 43 radial nach außen gerichtete Zähne aufweisen, so dass der Statorkern 41 die Stützabschnitte 22.4 über die radial nach außen gerichteten Zähne kontaktiert.

Zusätzlich oder alternativ kann der Statorkern 41 in Achsenrichtung der Welle 12 an Widerlagern 22.5 des Motorgehäuses 20 abgestützt sein. Die Widerlager 22.5 können beispielsweise an die Stützabschnitte 22.4 im Winkel anschließen. Über die Widerlager 22.5 wird ein definierter Abstand des Motorstators 40 zu dem sich an das Motorgehäuse 20 anschließende Lagergehäuse 11 eingehalten. Vorzugsweise sollte dieser Abstand nicht kleiner als zwei Millimeter sein. Dieser Mindestabstand ist insbesondere dann erforderlich, wenn das Lagergehäuse 11 aus einem magnetisierbaren Material besteht.

Die radial innen liegenden Polstücke 44 liegen auf einem Innenkreis, wie die Figuren 2 und 3 zeigen. Dieser Innenkreis ist konzentrisch zu der Durchführung 21.1 in der Wandung 21 angeordnet.

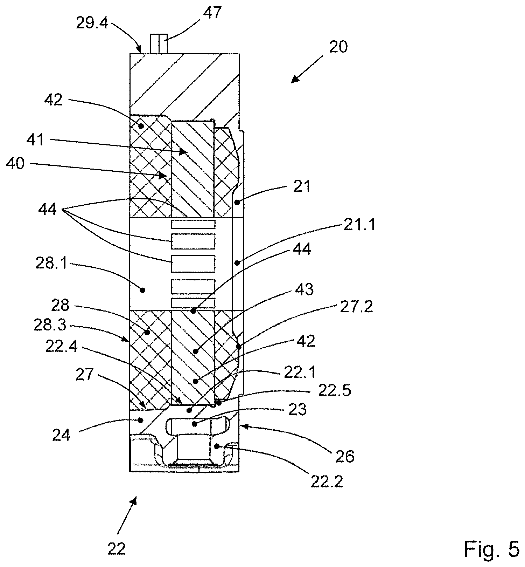

Der in das Motorgehäuse 20 eingelegte Statorkern 41 kann mit der Vergussmasse 28 umschlossen werden, wie dies die Figuren 1 und 5 zeigen. Der eingegossen Statorkern 41 wird dabei im Bereich der Spulen 45, der Zähne 43 und der Verbindungsabschnitte 42 von der Vergussmasse 28 umgeben. Lediglich die freien Enden der Zähne 43, welche die Polstücke 44 bilden und/oder die den Stützabschnitten 22.4 und/oder den Widerlagern 22.5 zugekehrten Bereiche werden nicht von der Vergussmasse 28 umschlossen. Denkbar ist es jedoch auch, dass zwischen den Stützabschnitten 22.4 und/oder den Widerlagern 22.5 Spaltbereiche gebildet werden, in denen auch Vergussmasse 28 angeordnet ist.

Die Figuren 1 und 5 zeigen weiter, dass die Polstücke 44 unter Einhaltung eines Spaltbereichs dem Motorrotor 12.4 gegenüberstehen. Koaxial zu dem von den Polstücken 44 eingeschlossenen Kreis bildet die Vergussmasse 28 einen Durchbruch 28.1. Vorzugsweise entspricht der Durchmesser dieses als Bohrung ausgebildeten Durchbruchs 28.1 dem Durchmesser des von den Polstücken 44 eingeschlossenen Kreises. Dann kann der Durchbruch 28.1 und die radial innen liegenden Enden der Polstücke 44 in einer Aufspannung bearbeitet werden. Beispielsweise können mit einem Bohrer der Durchbruch 28.1 und gleichzeitig die Polstücke 44 bearbeitet werden.

Figur 1 zeigt, dass die Vergussmasse 28 hinter dem Verdichterrad 12.9 eine Begrenzungsfläche 28.2 aufweist. Dabei ist die Begrenzungsfläche 28.2 unter Einhaltung eines Spalts beabstandet zu der Rückseite des Abschlusselements 36 des Verdichterrads 12.9 angeordnet. Die Vergussmasse 28 kann passgenau zur Erzeugung der Begrenzungsfläche bearbeitet und an die Kontur des Verdichterrads 12.9 angepasst werden. Die Begrenzungsfläche 28.2 kann, wie dies Figur 1 weiter zeigt, über einen Absatz in ein Luftführungselement 28.3 übergehen. Das Luftführungselement 28.3 erstreckt sich vorzugsweise in radialer Richtung.

Der Absatz zwischen der Begrenzungsfläche 28.2 und dem Luftführungselement 28.3 kann beispielsweise dergestalt sein, dass er den radial außen liegenden Bereich des Abschlusselements 36 übergreift. Hierdurch wird eine verbesserte Luftführung insbesondere dann erreicht, wenn das Luftführungselement 28.3 sich vorzugsweise absatzlos unmittelbar an die von den Verdichterschaufeln 12.10 gebildeten Luftführungsbereiche anschließt.

Das Luftführungselement 28.3 kann, wie dies im Ausführungsbeispiel nach Figur 1 gezeigt ist, eine Begrenzungsfläche für den Diffusorkanal 35 bilden. Entsprechend wird der Diffusorkanal 35 zwischen dem Luftführungselement 28.3 und einem Wandbereich des Verdichtergehäuses 30 gebildet.

Im Rahmen der Erfindung muss sich das Luftführungselement 28.3 nicht oder nicht vollständig radial erstrecken. Es kann auch eine beliebige andere Kontur aufweisen, um in optimaler Weise eine geeignete Luftführung zu bieten.

Die Figuren zeigen weiter, dass sich an den Diffusorkanal 35 der Verdichterkanal 32 in Form eines Spiralkanals anschließt. Das Luftführungselement 28.3 kann insbesondere bis in den Bereich des Verdichterkanals 32 geführt sein und/oder Teil von diesem sein. Allerdings ist es auch denkbar, dass das Luftführungselement 28.3 nur den Diffusorkanal 35 über dessen gesamte radiale Erstreckung oder nur über einen Teil seiner Radialerstreckung begrenzt.

Dadurch, dass das Luftführungselement 28.3 den Diffusorkanal 35 begrenzt, wird eine kompakte Bauweise des Turboladers in Achsenrichtung bewirkt. Insbesondere kann das Verdichterrad 12.9 dann nahe an der zugewandten Lagerstelle 14 angeordnet werden. Dies reduziert die Lagerbelastung und erhöht die Laufruhe des Turboladers 10.

In weiterer vorteilhafter Ausgestaltung kann die dem Verdichtergehäuse 30 zugewandte Seite der Vergussmasse 28 so bearbeitet sein, dass sie einen Absatz 28.4 bildet. Dieser Absatz 28.4 greift in eine Ausnehmung des Verdichtergehäuses 30 ein, um dieses exakt radial gegen über dem Motorgehäuse 20 auszurichten.

Figur 1 zeigt weiter, dass die Vergussmasse 28 im Bereich der Wandung 21 und koaxial zu der Durchführung 21.1 mit einer Freimachung 28.5 versehen sein kann. Damit wird erreicht, dass die Vergussmasse 28 die Positionierung des Zentrierabsatzes 17 nicht behindert.

Die Spulen 45 können über Strom-Versorgungsleitungen 46 an eine Spannungsversorgung angeschlossen sein. Die Strom-Versorgungsleitungen 46 sind vorzugsweise in die Vergussmasse 28 eingebettet. Wie Figur 1 zeigt, kann zu diesem Zweck beispielsweise zwischen dem Statorkern 41 und dem Verdichterrad 12.9 in dem Motorgehäuse 20 ein Raumbereich vorgesehen sein, in dem die Strom-Versorgungsleitungen 46 verlegt sind und der mit der Vergussmasse 28 ausgegossen ist. Auf diese Weise sind die Strom-Versorgungsleitungen 46 vor Korrosion und mechanischen Beanspruchungen geschützt untergebracht.

Figur 2 zeigt, dass das Motorgehäuse 20 seitlich eine Öffnung 29.3 aufweist, die Zugang zu dem Bereich schafft, in dem der Motorstator 40 im Motorgehäuse 20 aufgenommen ist. Diese Öffnung 29.3 dient dazu, die Strom-Versorgungsleitungen 46 seitlich aus dem von dem Motorgehäuse 20 gebildeten Raumbereich herauszuführen. Entsprechend können die Strom-Versorgungsleitungen 46 zu einer Anschlussseite 29.4 des Motorgehäuses 20 geführt werden. Vorzugsweise ist der die Öffnung 29.3 bildende Kanalbereich von der Vergussmasse 28 ausgefüllt. In Figur 1 ist angedeutet, dass im Bereich der Anschlussseite 29.4 ein Stromanschluss 47, beispielsweise ein Steckerelement angeordnet sein kann. Über diesen Stromanschluss 47 können die Spulen 45 an eine Spannungsversorgung einfach angekoppelt werden. Der Stromanschluss kann in die Vergussmasse 28 eingegossen sein.

Die Zeichnungen zeigen weiter, dass das Motorgehäuse 20 einen Kühlabschnitt 22.2 aufweist. Dieser Kühlabschnitt 22.2 umgibt den Motorstator 12.4 radial außen. In den Kühlabschnitt 22.2 ist ein Kühlmittelkanal 23 eingearbeitet. Dieser Kühlmittelkanal 23 umläuft den Motorstator 12.4 über zumindest 180°, vorzugsweise über zumindest 270° seines Umfangs. Die Enden des Kühlmittelkanals 23 münden in einem Kühlmittelauslass 29.1 und in einem Kühlmitteleinlass 29.2. Der Kühlmittelauslass 29.1 und der Kühlmitteleinlass 29.2 können so hergerichtet sein, dass darin Anschlussstutzen positioniert sind, über die ein Schlauch oder dergleichen Kühlmittelleitung angeschlossen werden kann. Wie Figur 2 zeigt, sind der Kühlmittelauslass 29.1 und der Kühlmitteleinlass 29.2 nebeneinander auf der gleichen Seite des Motorgehäuses 20 ausgebildet. Auf diese Weise entsteht im Motorgehäuse 20 ein Kühlmantel, der das Motorgehäuse 20 nahezu komplett in Umfangsrichtung des Motorgehäuses 20 umströmen kann.

Idealerweise werden die Stromversorgungsleitungen 46 zwischen dem Kühlmittelauslass 29.1 und dem Kühlmitteleinlass 29.2 durch die Öffnung 29.3 hindurch geführt, sodass es keine Kollision zwischen der Verkabelung und der Kühlmittelführung gibt.

Weiter idealerweise ist das Motorgehäuse aus einem thermisch gut leitenden Material, beispielsweise Aluminium hergestellt. Denkbar ist auch die Verwendung eines geeigneten Kunststoffes. Das Material sollte wegen der kompakten Bauweise des Motorgehäuses 20 nicht magnetisierbar sein, um die Funktionalität des Elektromotors nicht zu beeinträchtigen.

Wenn das Motorgehäuse 20 als Gussteil hergestellt wird, so wird zur Herstellung des Kühlmittelkanals 23 ein verlorener Kern eingesetzt. Für dessen Herstellung werden ein oder werden mehrere radiale Zugänge zum Kühlmittelkanal 23 geschaffen. Über diese radialen Zugänge kann der verlorene Kern nach Fertigung des Motorgehäuses 20 entnommen werden. Die Radialzugänge lassen sich dann beispielsweise mit einem Stopfen 25 fluiddicht verschließen.

Die Montage des Turboladers 10 ist wie folgt. Zunächst wird das Lagergehäuse 11 mit der darin gelagerten Welle 12 hergerichtet. Anschließend wird das Motorgehäuse 20 über die Welle 12 geschoben, bis der Motorrotor 12.4 dem Motorstator 40 unter Bildung eines Spaltbereichs gegenübersteht. Diese Fügebewegung wird mittels der Befestigungsfläche 16.1, an der das Motorgehäuse 20 anschlägt, begrenzt. Anschließend kann das Verdichterrad 12.9 auf der Welle 12 montiert und die Mutter 12.8 angezogen werden.

Abschließend wird das Verdichtergehäuse 30 an der dem Lagergehäuse 11 gegenüberliegenden Seite an das Motorgehäuse 20 angefügt. Das Verdichtergehäuse 30, das Motorgehäuse 20 und das Lagergehäuse 11 weisen zueinander fluchtende Bohrungen auf. Durch diese können Befestigungsschrauben 50 hindurchgesteckt und verschraubt werden. Alternativ kann das Motorgehäuse 20 auch am Lagergehäuse 11 angeschraubt sein. Das Verdichtergehäuse 30 kann auch nur mit dem Motorgehäuse 20, beispielsweise über eine getrennte Verschraubung oder über ein Spannband verbunden werden.

Zur Fertigung des Motorgehäuses 20 wird zunächst die in den Figuren 2 und 3 gezeigte Baueinheit gebildet. Dabei ist die Wandung 21 so gestaltet, dass sie noch nicht mit der Durchführung 21.1 versehen ist. Anschließend kann die in den Figuren 2 und 3 gebildete Baueinheit mit der Vergussmasse 28 befüllt werden. Dann wird in einem Arbeitsschritt der Durchbruch 28.1 in der Vergussmasse 28 und gleichzeitig die Durchführung 21.1 gebohrt. Weiterhin lassen sich an der ausgehärteten Vergussmasse 28 das Luftführungselement 28.3 und/oder die Begrenzungsfläche 28.2 und/oder der Absatz 28.4 und/oder die Freimachung 28.5 mittels spanender Bearbeitung nacharbeiten.

Im Rahmen der Erfindung kann die Vergussmasse 28 von einem thermisch beständigen Material, vorzugsweise einem Harzmaterial, beispielsweise von einem mit Aluminiumoxid gefüllten Hochtemperaturharz gebildet sein.

Bevorzugt ist die Vergussmasse von einem wärmeleitenden Material gebildet und weist vorzugsweise eine Wärmeleitfähigkeit im Bereich zwischen 0,5 W / (m K) und 5 W / (m K) auf. Auf diese Weise kann die Verlustwärme des Elektromotors zuverlässig über die Kontaktbereiche zwischen der Vergussmasse 28 und dem Motorgehäuse 20 in das Kühlmedium im Kühlmittelkanal 23 abgeleitet werden. Auch wird auf diese Weise eine Wärmeableitung über das Luftführungselement 28.3 in die Verdichterluft, welche im Verdichtergehäuse 30 geführt wird, erreicht.

Um einen Kurzschluss zu verhindern, besteht die Vergussmasse 28 vorzugsweise aus einem elektrisch nicht leitenden Material. Dann kann auf zusätzliche Isolationsmaßnahmen verzichtet werden.

Wie Figur 2 zeigt, kann an das Motorgehäuse 20 ein Halter 60, zur Befestigung eines Aktuators des elektrisch unterstützten Turboladers, angegossen sein.

In dem in den Figuren 1 bis 5 dargestellten Ausführungsbeispiel wird der Statorkern 41 an den axial nach innen vorspringenden Stützabschnitten 22.4 gegenüber der Innenwand 22.1 abgestützt. Alternativ ist es jedoch auch denkbar, dass radial nach außen vorspringende Stützabschnitte am Statorkern 41 vorhanden sind, die dann im Kontakt zu dem Motorgehäuse 20 stehen.

Um eine Verdrehung des Statorkerns 41 gegenüber dem Motorgehäuse 20 zu verhindern, empfiehlt es sich erfindungsgemäß, eine in Umfangsrichtung formschlüssige Verbindung zwischen dem Motorgehäuse 20 und dem Statorkern 41 vorzusehen.

Zusätzlich oder alternativ kann bei den erfindungsgemäßen Ausführungsformen eine Verdrehung des Statorkerns 41 gegenüber dem Motorgehäuse 20 mittels der Vergussmasse 28 stoffschlüssig verhindert werden.

Weiterhin kann erfindungsgemäß beispielsweise auch eine stoffschlüssige und/oder formschlüssige Verbindung zwischen dem Statorkern 41 und dem Motorgehäuse 20 hergestellt werden.

Eine weitere alternative Ausgestaltungsvariante der Erfindung sieht vor, dass die Motoreinheit ein ringförmiges Motorgehäuse 20 aufweist, das sowohl auf der Verdichterseite als auch auf der Lagergehäuseseite von der elektrisch isolierenden Vergussmasse 28 abgeschlossen ist. Das Motorgehäuse 20 ist somit bodenlos und nicht topfförmig ausgestaltet.

Eine weitere alternative Ausgestaltungsvariante kann so sein, dass das Motorgehäuse 20 und das Lagergehäuse 11 gemeinsam einteilig, zum Beispiel aus Aluminium oder Kunststoff gefertigt sind.

Während des Betriebs des Turboladers 10 kann der Antrieb des Verdichterrads 12.9 durch den Elektromotor unterstützt werden. Dabei entsteht in den Spulen 45 des Motorstators 40 Verlustwärme. Diese Verlustwärme überträgt sich auf den Statorkern 41. Da nun der Statorkern über die Stützabschnitte 22.4 mit dem Motorgehäuse 20 in Verbindung steht, wird diese Wärme in das Motorgehäuse 20 zumindest teilweise eingetragen. Das Motorgehäuse 20 besteht aus einem gut wärmeleitfähigen Material, beispielsweise Aluminium, wie dies oben erwähnt wurde. Dementsprechend wird die Wärme in den Kühlmittelkanal und das dort strömende Fluid geleitet. Wenn, wie bei dem vorliegenden Ausführungsbeispiel auch vorgesehen ist, dass der Statorkern 41 an den Widerlagern 22.5 abgestützt ist, so erfolgt auch über die Widerlager 22.5 ein Wärmeeintrag in das Motorgehäuse 20.

Im Rahmen der Erfindung kann es zum Zwecke einer besonders effektiven Wärmeabfuhr vorgesehen sein, dass jedem Verbindungsabschnitt 42 des Statorkerns 41 ein Stützabschnitts 22.4 und/oder ein Widerlager 22.5 zugeordnet ist. Hierdurch kann die thermisch wirksame Kontaktfläche zwischen dem Statorkern 51 und dem gekühlten Gehäuse 20 maximiert werden. Im vorliegenden Ausführungsbeispiel sind sechs Polpaare des Elektromotors vorgesehen. Dementsprechend sind zwölf Stützabschnitte 22.4 und/oder zwölf Widerlager 22.5 vorgesehen. Dies ist jedoch nicht zwingend. Insbesondere kann auch nur einem Teil der Stützabschnitte 22.4 und/oder ein Teil der Widerlager 22.5 an dem Statorkern 41 anliegen.

Die Zeichnungen zeigen auch, dass die Stützabschnitte 22.4 in radialer Verlängerung zu den Zähnen 43 des Statorkerns stehen. Besonders vorteilhaft ist es, wenn die miteinander in Verbindung stehenden Kühlabschnitte des Motorgehäuses 20 und der Verbindungsabschnitte 42 des Statorkerns 41 zentrisch oder annähernd zentrisch zwischen den benachbarten Spulen 45 angeordnet sind, um eine gleichmäßige Wärmeabfuhr zu erreichen.

Wie insbesondere Figur 2 zeigt, erstreckt sich der Kühlmittelkanal 23 von dem Kühlmitteleinlass 29.2 zu dem Kühlmittelauslass 29.1. Die Zeichnung gibt zu erkennen, dass sich dabei der Kühlmittelkanal 23 um über 270° des Umfangs des Motorstators 40 erstreckt, so das eine besonders effektive Kühlung möglich wird.

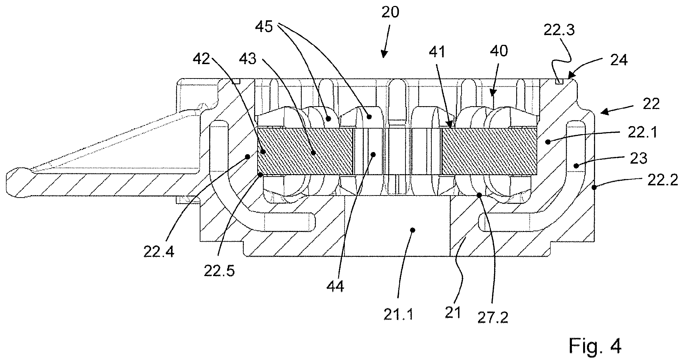

In Figur 4 ist eine Motoreinheit gezeigt, die im Wesentlichen der Motoreinheit gemäß den Figuren 1 bis 3 und 5 entspricht. Insofern wird auf die vorstehenden Ausführungen zu diesen Figuren Bezug genommen. Zur Vermeidung von Wiederholungen wird lediglich auf die Unterschiede eingegangen. Wie Figur 4 zeigt, ist das Motorgehäuse 20 hinsichtlich der Gestaltung des Kühlmittelkanals 23 abgeändert. Dementsprechend weist der Kühlmittelkanal 23 einen ersten Bereich auf, der sich in Achsrichtung der Welle erstreckt. Anschließend an diesen 1. Bereich besitzt der Kühlmittelkanal 23 einen Radialbereich, der sich zumindest bereichsweise in radialer Richtung erstreckt. Die Projektionen des Motorstators 40 und des Radialbereichs in Richtung der der Achse der Welle 12 in eine Ebene überdecken sich zumindest bereichsweise. Bei dieser Ausgestaltung eines Turboladers 10 wird nicht nur eine Wärmeabfuhr von den Spulen 45 in den Kühlmittelkanal 23 in radialer Richtung, sondern auch in Achsenrichtung der Welle 12 erreicht.

## Patentansprüche

1. Turbolader (10), insbesondere Abgasturbolader, mit einem Lagergehäuse (11), in dem eine Welle (12) drehbar gelagert ist, wobei die Welle (12) ein Verdichterrad (12.9) trägt, wobei ein Elektromotor zum Antrieb der Welle (12) vorgesehen ist, der einen Motorstator (40) und einen mit der Welle (12) gekoppelten Motorrotor (12.4) aufweist, wobei der Motorstator (40) zumindest bereichsweise in einem Motorgehäuse (20) aufgenommen ist und einen Statorkern (41) mit elektrischen Spulen (45) aufweist, wobei im oder am Motorgehäuse (20) eine Vergussmasse (28) vorgesehen ist, wobei der Statorkern (41) und/oder die Spulen (45) zumindest bereichsweise in der Vergussmasse (28) eingebettet sind, wobei weiterhin eine Gaszuführung (31) vorgesehen ist, die in Strömungsrichtung vor dem Verdichterrad (12.9) angeordnet ist und in Strömungsrichtung nach dem Verdichterrad (12.9) in einen Diffusorkanal (35) übergeleitet ist, und wobei der Diffusorkanal (35) mittelbar oder unmittelbar in einen spiralförmigen Verdichterkanal (32) übergeleitet ist,
**dadurch gekennzeichnet,**
**dass** die Vergussmasse (28) einen Wandabschnitt bildet, der als Luftführungselement (28.3) den Diffusorkanal (35) und/oder den Verdichterkanal (32) begrenzt.

2. Turbolader nach Anspruch 1, **dadurch gekennzeichnet, dass** ein Verdichtergehäuse (30) vorgesehen ist, das mit dem Motorgehäuse (20) gekoppelt ist, und dass das Verdichtergehäuse (30) zumindest bereichsweise den Diffusorkanal (35) und/oder den Verdichterkanal (32) aufweist.

3. Turbolader nach Anspruch 1 oder 2, **dadurch gekennzeichnet, dass** sich das von der Vergussmasse (28) gebildete Luftführungselement (28.3) zumindest bereichsweise radial zur Drehachse der Welle (12) erstreckt.

4. Turbolader nach einem der Ansprüche 1 bis 3, **dadurch gekennzeichnet, dass** das Verdichterrad (12.9) ein Abschlusselement (36) aufweist, das auf der der Gaszuführung (31) zugewandten Seite Verdichterschaufeln (12.10) trägt, dass die Vergussmasse (28) eine Begrenzungsfläche (28.2) aufweist, und dass zwischen der den Verdichterschaufeln (12.10) abgewandten Seite des Abschlusselements (36), und der Begrenzungsfläche (28.2) ein Spaltbereich gebildet ist.

5. Turbolader nach Anspruch 4, **dadurch gekennzeichnet, dass** die Begrenzungsfläche (28.2) über einen Absatz in die Fläche des Luftführungselements (28.3) übergeht, wobei vorzugsweise vorgesehen ist, dass der Absatz den radial außenliegenden Umfangsbereich des Abschlusselements (36) unter Bildung eines Spaltbereichs zumindest bereichsweise übergreift.

6. Turbolader nach einem der Ansprüche 1 bis 5, **dadurch gekennzeichnet, dass** das Motorgehäuse (20) eine Wandung (21) aufweist, die einen Bodenabschnitt (27.2) bildet und die dem Lagergehäuse (11) zugewandt ist, dass von der Wandung (21) eine Innenwand (22.1) aufsteigt, die sich in Richtung der Drehachse der Welle (12) erstreckt, und dass die Wandung (21) und die Innenwand (22.1) einen topfartigen Aufnahmebereich (27) bilden, in dem die Vergussmasse (28) aufgenommen ist.

7. Turbolader nach Anspruch 6, **dadurch gekennzeichnet, dass** die Wandung (21), die den Bodenabschnitt (27.2) bildet, eine Durchführung (21.1), vorzugsweise eine Bohrung aufweist, dass die Vergussmasse (28) einen Durchbruch (28.1), vorzugsweise eine Bohrung aufweist, dass die Durchführung (27.2) und der Durchbruch (28.1) zueinander in Flucht stehen, und dass sich die Welle (12) durch den Durchbruch (28.1) und die Durchführung (21.1) hindurch erstreckt.

8. Turbolader nach einem der Ansprüche 6 oder 7, **dadurch gekennzeichnet, dass** das Lagergehäuse (11) einen Zentrierabschnitt (17) aufweist, der mit der als Zentrieraufnahme ausgebildeten Durchführung (21.1) der Wandung (21) zusammenarbeitet, insbesondere in diese eingreift, um das Motorgehäuse (20) gegenüber dem Lagergehäuse (11) auszurichten.

9. Turbolader nach einem der Ansprüche 1 bis 8, **dadurch gekennzeichnet, dass** der Motorstator (40) einen Statorkern (41) aus ferromagnetischem Material aufweist, dass der Statorkern (41) einen einteiligen oder mehrteiligen Ringabschnitt aufweist, an den sich radial nach innen erstreckende Zähne (43) angekoppelt sind, dass die Zähne (43) in Polstücken (44) enden, die unter Bildung eines Spaltbereichs dem Motorrotor (12.4) gegenüberstehen, und dass der Ringabschnitt zwischen benachbarten Zähnen (43) Verbindungsabschnitte (42) als Joche ausbildet, auf die die Spulen (45) des Motorstators (40) aufgewickelt sind.

10. Turbolader nach Anspruch 9, **dadurch gekennzeichnet, dass** die Zähne (43) von der Vergussmasse (28) zumindest teilweise umgeben sind, wobei vorgesehen ist, dass zumindest ein Teil der Polstücke (44) an ihren an den Spaltbereich angrenzenden Enden nicht mit Vergussmasse (28) bedeckt ist.

11. Turbolader nach Anspruch einem der Ansprüche 1 bis 10, **dadurch gekennzeichnet, dass** der Motorstator (40) eine maximale Längserstreckung (L) in Achsrichtung der Welle (12) und einen maximalen Außendurchmesser (D) aufweist, und dass das Verhältnis (L/D) der maximale Längserstreckung (L) zu dem maximalen Außendurchmesser (D) ≤0,33, vorzugsweise ≤0,3 ist.

12. Turbolader nach einem der Ansprüche 1 bis 11, **dadurch gekennzeichnet, dass** die Innenwand (22.1) des Motorgehäuses (20) über eine Verrundung (27.1) in die den Bodenabschnitt (27.2) bildende Wandung (21) übergeht, und dass im Bereich dieser Verrundung (27.1) zumindest ein radial äußerer Krümmungsbereich der Wicklung einer Spule (45) angeordnet ist.

13. Turbolader nach einem der Ansprüche 1 bis 12, **dadurch gekennzeichnet, dass** die Innenwand (22.1) des Motorgehäuses (20) Aufnahmebereiche (27) aufweist, die in Form von radial nach außen in die Innenwand eingetieften Aufnahmen ausgebildet sind, und dass in den Aufnahmebereichen (27) jeweils zumindest eine Spule (45) mit ihrem radial außenliegenden Spulenbereich zumindest teilweise aufgenommen ist.

14. Turbolader nach einem der Ansprüche 1 bis 13, **dadurch gekennzeichnet, dass** das Motorgehäuse (20) zwischen der dem Lagergehäuse (11) abgewandten Seite des Motorstators (12.4) und der dem Verdichterrad (12.9) zugewandten Seite einen Raumbereich bildet, in dem die Strom-Versorgungsleitungen (46) für die Spulen (45) zumindest bereichsweise angeordnet und in die Vergussmasse (28) eingegossen sind.

15. Turbolader nach Anspruch 14, **dadurch gekennzeichnet, dass** das Motorgehäuse (20) eine Öffnung (29.3) aufweist, die einen Zugang zu dem Raumbereich schafft, in dem die Strom-Versorgungsleitungen (46) angeordnet sind, dass zumindest ein Teil der Stromversorgungsleitungen (46) über die Öffnung (29.3) aus dem Raumbereich zu einer Anschlussseite (29.4) geführt sind, und dass die Öffnung (29.3) zumindest teilweise mit der Vergussmasse (28) ausgefüllt ist, wobei vorzugsweise vorgesehen ist, dass die Öffnung (29.3) im Bereich einer Seite des Motorgehäuses (20) mündet, die sich quer zu der zwischen Motorgehäuse (20) und Lagergehäuse (11) gebildeten Anreihseite (16.1) erstreckt.

16. Turbolader nach einem der Ansprüche 1 bis 15, **dadurch gekennzeichnet, dass** der Statorkern (41) radial zur Drehachse der Welle (12) gesehen außenliegend Stützflächen aufweist, die an Stützabschnitten (22.4) des Motorgehäuses (20) in Radialrichtung abgestützt sind und/oder dass der Statorkern (41) axial zur Drehachse der Welle (12) gesehen außenliegend Stützflächen aufweist, die an axial Widerlagern (22.5) des Motorgehäuses (20) in Axialrichtung abgestützt sind, wobei vorzugsweise vorgesehen ist, dass die Stützabschnitte (22.4) und/oder die Widerlager (22.5) einteilig von dem Motorgehäuse (20) gebildet sind.

17. Turbolader nach einem der Ansprüche 1 bis 16, **dadurch gekennzeichnet, dass** die Welle (12) im Bereich der dem Motorgehäuse zugewandten Anreihseite mittels eines hydrodynamischen Gleitlagers (12.2) gelagert ist.
